# EUROPEAN PATENT SPECIFICATION

(11) **EP 0 759 886 B1**
(45) Date of publication and mention of the grant of the patent: **29.07.1998**
(21) Application number: 95920060.1
(22) Date of filing: 16.05.1995
(51) Int. Cl.: C01B 3/36, C10J 3/48

(54) **A PROCESS FOR THE MANUFACTURE OF SYNTHESIS GAS BY PARTIAL OXIDATION OF A LIQUID HYDROCARBON-CONTAINING FUEL USING A MULTI-ORIFICE (CO-ANNULAR) BURNER**
VERFAHREN ZUR HERSTELLUNG VON SYNTHESEGAS DURCH TEILOXIDATION ENES FLÜSSIGEN KOHLENWASSERSTOFF ENTHALTENDEN BRENNSTOFFES, WOBEI EIN BRENNER MIT MEHREREN (KONZENTRISCH, RINGFÖRMIG) AUSLASSÖFFNUNGEN BENUTZT WIRD
PROCEDE POUR LA FABRICATION D'UN GAZ DE SYNTHESE PAR OXYDATION PARTIELLE D'UN COMBUSTIBLE LIQUIDE CONTENANT DES HYDROCARBURES, AU MOYEN D'UN BRULEUR A PLUSIEURS ORIFICES (COANNULAIRE)

(30) Priority: 19.05.1994 EP 94201428
(43) Date of publication of application: 05.03.1997
(73) Proprietor: SHELL INTERNATIONALE RESEARCH MAATSCHAPPIJ B.V., 2596 HR Den Haag (NL)
(72) Inventor: DISSELHORST, Johannes, Hermanus, Maria, NL-1031 CM Amsterdam (NL); EULDERINK, Frits, NL-1031 CM Amsterdam (NL); OORTWIJN, Peter, NL-1031 CM Amsterdam (NL); SMIT, Jacobus, Antonius, Jozef, NL-1031 CM Amsterdam (NL); WENTINCK, Hendrik, Martinus, NL-1031 CM Amsterdam (NL)
(86) International application number: EP9501891
(87) International publication number: WO9532148

(56) References cited:
- EP-A- 0 107 225
- EP-A- 0 291 111
- EP-A- 0 343 735
- EP-A- 0 545 281
- GB-A- 2 151 348

## Description

The invention relates to a process for the manufacture of synthesis gas by partial oxidation of a liquid hydrocarbon-containing fuel using a multi-orifice (co-annular) burner.

In particular, the invention relates to a process for partial oxidation of a liquid, hydrocarbon-containing fuel such as oil residue wherein an oxygen-containing gas which is applied as an oxidizer, and a liquid, hydrocarbon-containing fuel are supplied to a gasification zone through a multi-orifice (co-annular) burner comprising a concentric arrangement of n passages or channels coaxial with the longitudinal axis of said burner, wherein n is an integer ≥ 3, and wherein autothermically a gaseous stream containing synthesis gas is produced under appropriate conditions.

The oxygen-containing gas which is applied as an oxidizer, is usually air or (pure) oxygen or steam or a mixture thereof. Further, in order to control the temperature in the gasification zone a moderator gas (for example steam, water or carbon dioxide or a combination thereof) can be supplied to said zone.

Those skilled in the art will know the conditions of applying oxidiser and moderator.

Synthesis gas is a gas comprising carbon monoxide and hydrogen, and it is used, for example, as a fuel gas or as a feedstock for the synthesis of methanol, ammonia or hydrocarbons, which latter synthesis yields gaseous hydrocarbons and liquid hydrocarbons such as gasoline, middle distillates, lub oils and waxes.

In the specification and in the claims the term liquid, hydrocarbon-containing fuel will be used to refer to hydrocarbon-containing fuel that is a liquid, an emulsion or a pumpable slurry at gasifier feed pressure and temperature.

This includes, for example, butanes, pentanes, hexanes and on up through the entire liquid range including natural gasolines, kerosenes, gas oils, naphthas, diesel fuels, crude oils, residua, whether atmospheric or vacuum, coal tars, tar sand oils, shale oils, as well as hydrocarbons which may contain other atoms, such as oxygen; however, in such proportions as not to interfere with self-sustaining combustion. Included by definition are slurries of solid carbonaceous fuels in the aforesaid liquid hydrocarbons.

According to an established process, synthesis gas is produced by partially oxidizing in a reactor vessel a fuel such as liquid hydrocarbon, in particular heavy oil residue, at a temperature in the range of from 1000 °C to 1800 °C and at a pressure in the range of from 0.1 MPa to 6 MPa abs. with the use of an oxygen containing gas.

Synthesis gas will often be produced near or at a crude oil refinery because the produced synthesis gas can directly be applied as a feedstock for the production of middle distillates, ammonia, hydrogen, methanol or as a fuel gas, for example, for heating the furnaces of the refinery or more efficiently for the firing of gas turbines to produce electricity and heat.

In co-annular (multi-orifice) oil burners it has appeared that the burner lifetime is restricted by serious corrosion caused by flame phenomena occurring on the burner tips. By means of such phenomena the temperature of the burner-internals becomes too high and serious burner damage will occur.

It is an object of the invention to provide a process for partial oxidation of a liquid, hydrocarbon-containing fuel wherein the mixing of the oxygen-containing gas applied as oxidizer and hydrocarbon-containing fuel is achieved beyond the exit of the burner downstream and the flame is lifted from the front of the burner and wherein burner-damage by serious corrosion (high heat load) is suppressed.

The invention solves the above burner damage problem in that in the process of the invention the oxygen-containing gas applied as oxidizer and the liquid, hydrocarbon-containing fuel are supplied to the gasification zone through the respective channels of the said burner in such a manner that, in use, the oxygen-containing gas applied as oxidizer and the liquid, hydrocarbon-containing fuel are always separated by a moderator and are flowing for some time as separate streams outside the burner front.

In this manner flames occurring on the internal rims are removed and the burner-internal blades that form the internal separation wall between the passages of the burner and have a finite thickness, are remaining relatively cool and the fuel-oxidizer mixture close to the burner exit is less reactive which reduces the heat load on the internal rims.

The invention therefore provides a process for the manufacture of synthesis gas by reacting oxygen-containing gas, applied as oxidizer, hereafter called "X", moderator gas, hereafter called "M", and liquid, hydrocarbon-containing fuel, hereafter called "F" in a reaction zone of a substantially non-catalytic gas generator comprising the steps of injecting the said fuel and the said oxidizer into the reaction zone through a multi-orifice (co-annular) burner comprising an arrangement of n separate passages or channels coaxial with the longitudinal axis of the said burner wherein n is an integer ≥ 3 (3, 4, 5 ... ), wherein the (n-1)^{th} passage is the inner passage with respect to the n^{th} passage, measured from the longitinal axis of the said burner and wherein
F is passed through one or more of the passages whereby at least 2 passages remain,
X is passed through one or more of the remaining passages, whereby at least 1 passage remains, and
M is passed through one or more of the remaining passages in such a way that any two passages through which F resp. X are passed are separated by at least one passage through which M is passed.

Advantageously, the liquid, hydrocarbon-containing fuel is an oil residue with a viscosity between 1 and 1000 cSt and passes through one or more of the passages at a velocity or velocities between 2 and 40 m/s; the oxygen-containing gas (oxidizer) passes through one or more of the remaining passages at a velocity or velocities between 20 and 140 m/s; and the moderator gas passes through one or more of the remaining passages at a velocity or velocities between 5 and 140 m/s.

More advantageously, either oxygen-containing gas (oxidizer) or moderator gas is passed through the outermost passage.

Still more advantageously, in case of n ≥ 4, moderator gas is also passed through the outermost passage.

In another advantageous embodiment of the invention, with n ≥ 4, oxygen-containing gas oxidizer or moderator gas is also passed through the innermost passage.

In an advantageous embodiment of the invention the respective velocities are measured or calculated at the outlet of the said respective channels into the gasification zone. The velocity measurement or calculation can be carried out by those skilled in the art in any way suitable for the purpose and will therefore not be described in detail.

In another advantageous embodiment of the invention the moderator gas is steam and/or water and/or carbon dioxide. In still another advantageous embodiment of the invention the gasification process is carried out at a pressure of 0.1-12 MPa abs.

Multi-orifice burners comprising arrangements of annular concentric channels for supplying oxygen-containing gas (oxidizer), fuel and moderator to a gasification zone are known as such (vide e.g. EP-A-0,545,281 and DE-OS-2,935,754) and the mechanical structures thereof will therefore not be described in detail.

Usually such burners comprise a number of slits at the burner outlet and hollow wall members with internal cooling fluid (e.g. water) passages. The passages may or may not be converging at the burner outlet. Instead of comprising internal cooling fluid passages, the burner may be provided with a suitable ceramic or refractory lining applied onto or suspended by a means closely adjacent to the outer surface of the burner (front) wall for resisting the heat load during operation or heat-up/shut down situations of the burner. Advantageously, the exit(s) of one or more passages may be retracted or protruded.

The invention will now be described in more detail by reference to the following examples.

A number of examples are given in the Table. In this Table the following abbreviations are made:

### Feed 1: A residual fuel with the following typical elemental composition:

| | |
|---|---|
| C | 83.7% by weight |
| H | 8.6% |
| S | 6.8% |
| N | 0.5% |
| O | 0.3% |
| ash | 0.1% |

The supply temperature of this feedstock is 210-290 °C, whereby the viscosity ranges from 25 to 250 cSt.

### Feed 2: A mixture of liquid hydrocarbons with the following typical elemental composition:

| | |
|---|---|
| C | 85.5% by weight |
| H | 13.2% |
| S | 0.5% |
| N | 0.2% |
| O | 0.5% |
| ash | 0.1% |

The supply temperature of this feedstock is 100-180 °C, whereby the viscosity ranges from 10 to 100 cSt.

### Feed 3: A mixture of heavy tar and water (emulsion) in the mass ratio of about 1:0.4, in which the tar has the following typical elemental composition:

| | |
|---|---|
| C | 84.4% by weight |
| H | 10.5% |
| S | 3.7% |
| N | 0.6% |
| O | 0.5% |
| ash | 0.3% |

The supply temperature of this feedstock is 50-100 °C, whereby the viscosity ranges from 60 to 600 cSt.
- oxidiser 1: 99.4% pure oxygen at a temperature of 230-250 °C,
- oxidiser 2: a mixture of oxidiser 1/steam in the ratio 1:0.05
- oxidiser 3: a mixture of oxidiser 1/steam in the ratio 1:0.4
- Moderator gas 1: superheated steam at a temperature of 350-380 °C
- Moderator gas 2: an offgas mainly consisting of CO₂ at a temperature of 200-250 °C
A number of 5 examples has been presented. The following Table indicates the distributions of the reactants for these examples. The typical synthesis gas compositions are also given. The values of n as used in the description and claims are indicated and passage 1 is the first or central passage.

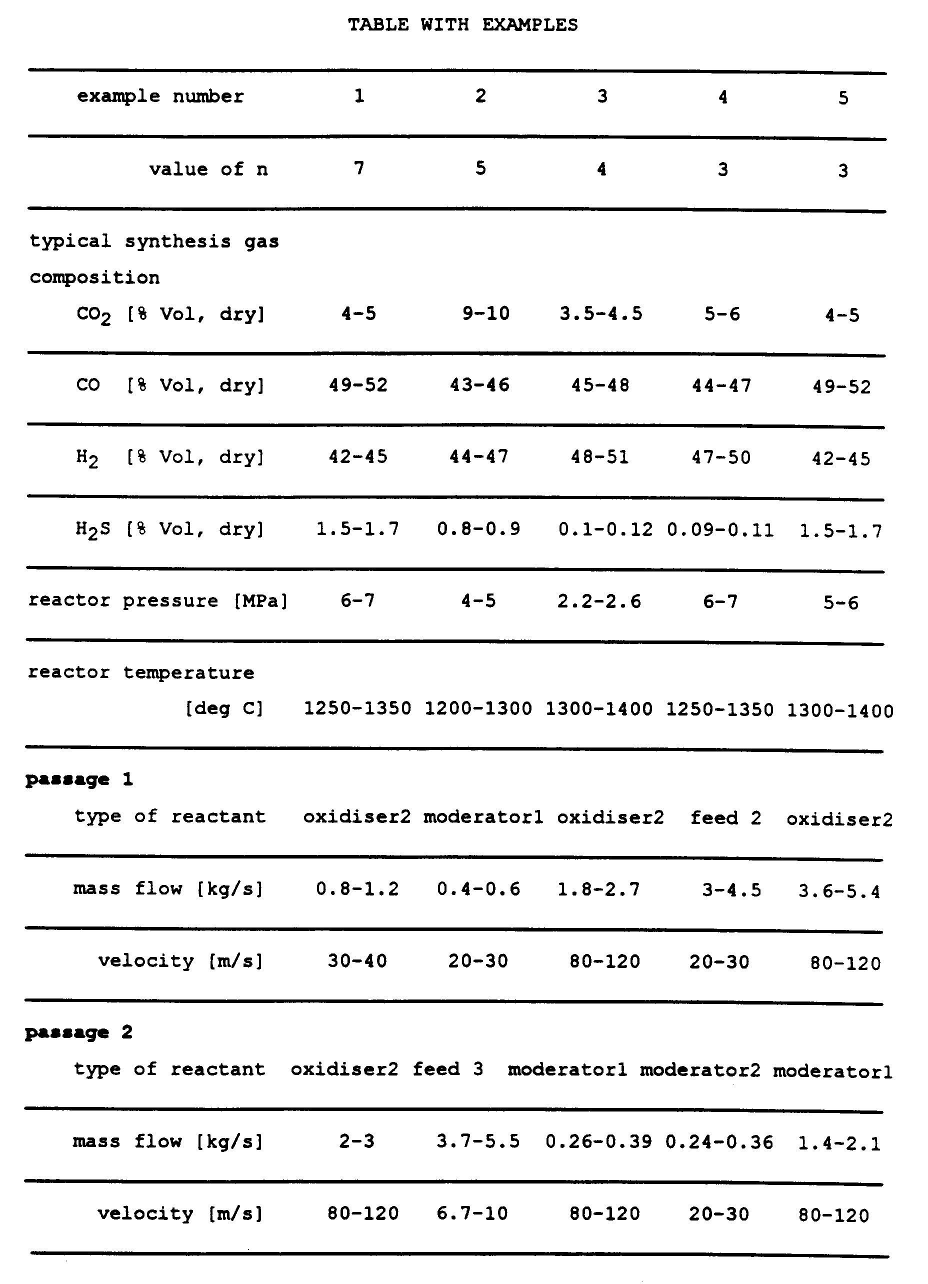

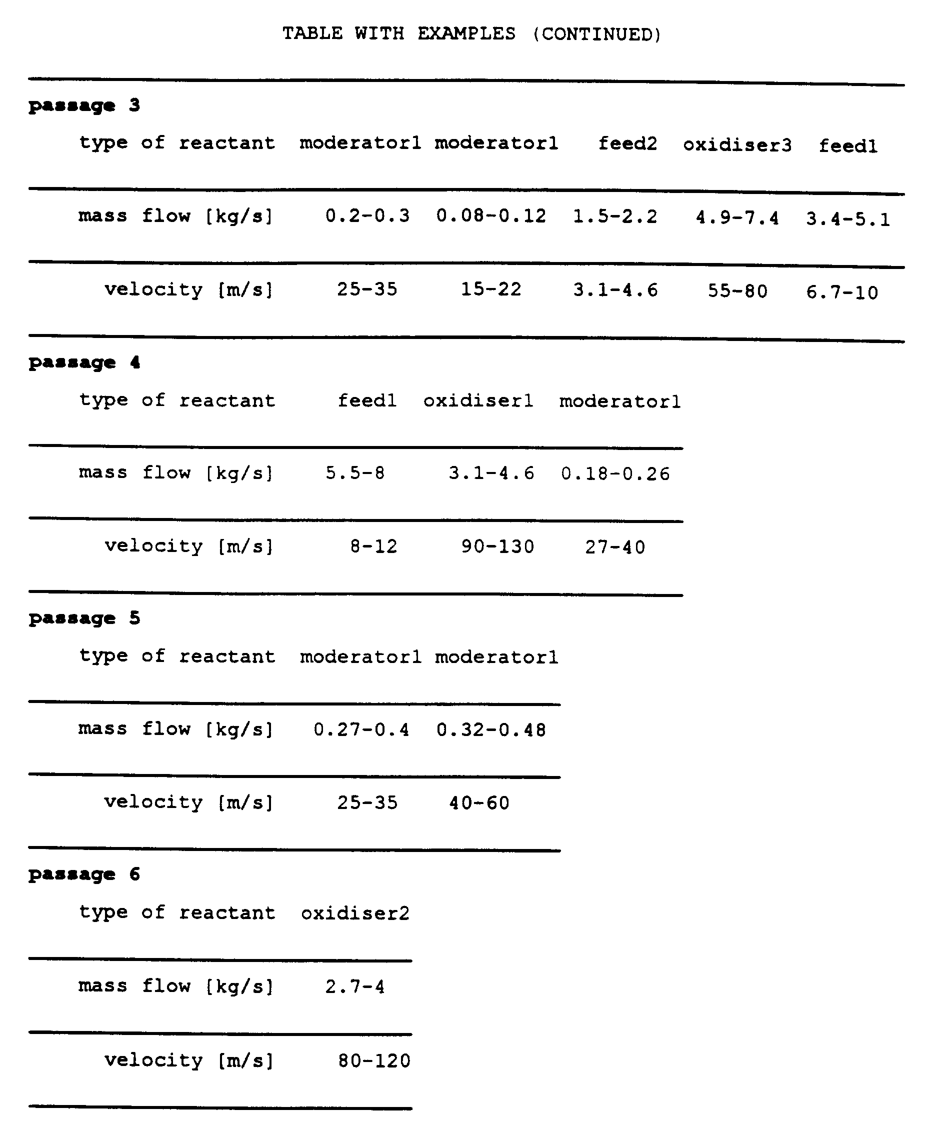

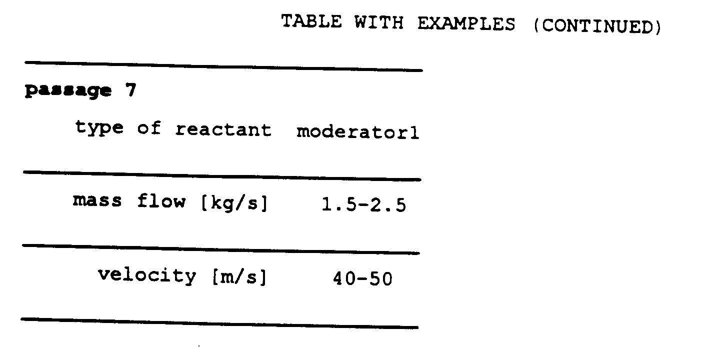

For n=6, the following data are applicable:

### passage 1

- type of reactant: : oxidiser2
- mass flow [kg/s]: : 2.8-4.2
- velocity [m/s]: : 80-120

### passages 2-6: vide data of passages 3-7 described in example number 1 (n=7)

Typical synthesis gas composition, reactor pressure and reactor temperature: vide data in question of example number 1 (n=7).

It will be appreciated by those skilled in the art that any slit width suitable for the purpose can be applied, dependent on the burner capacity.

Advantageously, the first or central passage has a diameter up to 70 mm, whereas the remaining concentric passages have slit widths in the range of 1-20 mm.

Various modifications of the present invention will become apparent to those skilled in the art from the foregoing description. Such modifications are intended to fall within the scope of the appended claims.

## Claims

1. A process for the manufacture of synthesis gas by reacting oxygen containing gas, applied as oxidiser, hereafter called "X", moderator gas, hereafter called "M", and liquid, hydrocarbon-containing fuel, hereafter called "F" in a reaction zone of a substantially non-catalytic gas generator comprising the steps of injecting the said fuel and the said oxidizer into the reaction zone through a multi-orifice (co-annular) burner comprising an arrangement of n separate passages or channels coaxial with the longitudinal axis of the said burner wherein n is an integer ≥ 3 (3, 4, 5 ...), wherein the (n-1)^{th} passage is the inner passage with respect to the n^{th} passage, measured from the longitudinal axis of the said burner, and wherein
F is passed through one or more of the passages, whereby at least 2 passages remain,
X is passed through one or more of the remaining passages, whereby at least 1 passage remains, and
M is passed through one or more of the remaining passages in such a way that any two passages through which F, respectively X are passed are separated by at least one passage through which M is passed.

2. The process as claimed in claim 1, wherein the liquid, hydrocarbon-containing fuel has a viscosity between 1 and 1000 cSt.

3. The process as claimed in claim 1 or 2, wherein the liquid, hydrocarbon-containing fuel is passed at a velocity or velocities between 2 and 40 m/s.

4. The process as claimed in any one of claims 1-3, wherein the oxygen-containing gas (oxidiser) is passed at a velocity or velocities between 20 and 140 m/s.

5. The process as claimed in any one of claims 1-4, wherein the moderator gas is passed at a velocity or velocities between 5 and 140 m/s.

6. The process as claimed in any one of claims 1-5, wherein the process pressure is 0.1-12 MPa abs.

7. The process as claimed in any one of claims 1-6, wherein the said fuel is oil residue.

8. The process as claimed in any one of claims 1-7, wherein the oxygen-containing gas (oxidiser) contains at least 90% pure oxygen.

9. The process as claimed in any one of claims 1-8, wherein the respective velocities are measured or calculated at the outlet of the said respective concentric channels into the gasification zone.

10. The process as claimed in any one of claims 1-9, wherein the moderator gas is steam, carbon dioxide or water or a combination thereof.

11. The process as claimed in any one of claims 1-10, wherein either X or M is passed through the outermost passage.

12. The process as claimed in any one of claims 1-11, with n is 4 or more, wherein M is passed through the outermost passage.

13. The process as claimed in any one of claims 1-11, with n is 4 or more, wherein X or M is passed through the innermost passage.

## Patentansprüche

1. Verfahren zum Herstellen von Synthesegas durch Reagieren von sauerstoffhältigem Gas, das als Oxidationsmittel angewandt wird und im folgenden "X" genannt wird, Moderatorgas, im folgenden "M" genannt, und flüssigem kohlenwasserstoffhältigem Kraftstoff, im folgenden "F" genannnt, in einer Reaktionszone eines im wesentlichen nicht-katalytischen Gasgenerators, mit den Schritten des Einspritzens des Kraftstoffes und des Oxldationsmittels in die Reaktionszone über einen Brenner mit mehreren (konzentrisch-ringförmigen) Öffnungen, der eine Anordnung aus n gesonderten Durchlässen oder Kanälen koaxial zur Längsachse des Brenners aufweist, wobei n eine Ganzzahl ≥ 3 ist (3, 4, 5 ...), wobei der (n-1)te Durchlaß der innere Durchlaß bezüglich des n-ten Durchlasses ist, gemessen von der Längsachse des Brenners, und wobei
F durch einen oder mehrere der Durchlässe geleitet wird, wobei zumindest zwei Durchlässe verbleiben,
X durch einen oder mehrere der verbleibenden Durchlässe geleitet wird, wobei zumindest ein Durchlaß verbleibt, und
M durch einen oder mehrere der verbleibenden Durchlässe in einer solchen Weise geleitet wird, daß jede zwei Durchlässe, durch welche F bzw. X geleitet werden, durch zumindest einen Durchlaß voneinander getrennt sind, durch den M geleitet wird.

2. Verfahren nach Anspruch 1, bei welchem der flüssige kohlenwasserstoffhältige Kraftstoff eine Viskosität zwischen 1 und 1000 cSt hat.

3. Verfahren nach Anspruch 1 oder 2, bei welchem der flüssige kohlenwasserstoffhältige Kraftstoff mit einer Geschwindigkeit oder Geschwindigkeiten zwischen 2 und 40 m/s durchgeleitet wird.

4. Verfahren nach einem der Ansprüche 1-3, bei welchem das sauerstoffhältige Gas (Oxidationsmittel) mit einer Geschwindigkeit oder Geschwindigkeiten zwischen 20 und 140 m/s durchgeleitet wird.

5. Verfahren nach einem der Ansprüche 1-4, bei welchem das Moderatorgas mit einer Geschwindigkeit oder Geschwindigkeiten zwischen 5 und 140 m/s durchgeleitet wird.

6. Verfahren nach einem der Ansprüche 1-5, bei welchem der Verfahrensdruck 0,1-12 MPa absolut ist.

7. Verfahren nach einem der Ansprüche 1-6, bei welchem der Kraftstoff ein Ölrückstand ist.

8. Verfahren nach einem der Ansprüche 1-7, bei welchem das sauerstoffhältige Gas (Oxidationsmittel) zumindest 90% reinen Sauerstoff enthält.

9. Verfahren nach einem der Ansprüche 1-8, bei welchem die jeweiligen Geschwindigkeiten am Auslaß der jeweiligen konzentrischen Kanäle in die Vergasungszone gemessen oder berechnet werden.

10. Verfahren nach einem der Ansprüche 1-9, bei welchem das Moderatorgas Dampf, Kohlendioxid oder Wasser oder eine Kombination daraus ist.

11. Verfahren nach einem der Ansprüche 1-10, bei welchem entweder X oder M durch den äußersten Durchlaß geleitet wird.

12. Verfahren nach einem der Ansprüche 1-11 mit n größer gleich 4, bei welchem M durch den äußersten Durchlaß geleitet wird.

13. Verfahren nach einem der Ansprüche 1-11 mit n größer gleich 4, bei welchem X oder M durch den innersten Durchlaß geleitet wird.

## Revendications

1. Procédé de fabrication du gaz de synthèse par la réaction d'un gaz contenant de l'oxygène, appliqué à titre d'oxydant, que l'on appellera dans la suite du présent mémoire "X", du gaz modérateur, que l'on appellera dans la suite du présent mémoire "M", et du combustible contenant des hydrocarbures, liquide, que l'on appellera dans la suite du présent mémoire "F", dans une zone de réaction d'un générateur de gaz sensiblement non catalytique, caractérisé en ce qu'il comprend les étapes consistant à injecter ledit combustible et ledit oxydant dans la zone de réaction à travers un brûleur multiorifice (coannulaire) comprenant un agencement de n passages ou canaux séparés, coaxiaux avec l'axe longitudinal dudit brûleur, où n est un nombre entier égal ou supérieur à 3, (3, 4, 5 ...), où le (n-1)^{ème} passage est un passage interne par rapport au n^{ème} passage, mesuré à partir de l'axe longitudinal dudit brûleur et où
on fait passer F à travers un ou plusieurs des passages, si bien qu'au moins deux passages subsistent,
on fait passer X à travers un ou plusieurs des passages subsistants, si bien qu'au moins un passage subsiste, et
on fait passer M à travers un ou plusieurs des passages subsistants en une manière telle que n'importe quels deux passages à travers lesquels F, respectivement X, sont amenés à passer, sont séparés par au moins un passage à travers lequel M est amené à passer.

2. Procédé suivant la revendication 1, caractérisé en ce que le combustible contenant des hydrocarbures, liquide, possède une viscosité comprise entre 1 et 1000 cSt.

3. Procédé suivant la revendication 1 ou 2, caractérisé en ce que l'on fait passer le combustible contenant des hydrocarbures, liquide, à une vitesse ou à des vitesses comprises entre 2 et 40 m/s.

4. Procédé suivant l'une quelconque des revendications 1 à 3, caractérisé en ce que l'on fait passer le gaz contenant de l'oxygène (oxydant) à une vitesse ou à des vitesses comprises entre 20 et 140 m/s.

5. Procédé suivant l'une quelconque des revendications 1 à 4, caractérisé en ce que l'on fait passer le gaz modérateur à une vitesse ou à des vitesses comprises entre 5 et 140 m/s.

6. Procédé suivant l'une quelconque des revendications 1 à 5, caractérisé en ce que la pression opératoire varie de 0,1 à 12 MPa abs.

7. Procédé suivant l'une quelconque des revendication 1 à 6, caractérisé en ce que ledit combustible est un résidu d'huile.

8. Procédé suivant l'une quelconque des revendications 1 à 7, caractérisé en ce que le gaz contenant de l'oxygène (oxydant) contient de l'oxygène pur à au moins 90%.

9. Procédé suivant l'une quelconque des revendications 1 à 8, caractérisé en ce que l'on mesure ou calcule les vitesses respectives à la sortie desdits canaux concentriques respectifs dans la zone de gazéification.

10. Procédé suivant l'une quelconque des revendications 1 à 9, caractérisé en ce que le gaz modérateur est de la vapeur d'eau, du dioxyde de carbone ou de l'eau, ou une combinaison de ceux-ci.

11. Procédé suivant l'une quelconque des revendications 1 à 10, caractérisé en ce que l'on fait passer X ou M à travers le passage le plus externe.

12. Procédé suivant l'une quelconque des revendications 1 à 11, avec n est égal à 4 ou plus, caractérisé en ce que l'on fait passer M à travers le passage le plus externe.

13. Procédé suivant l'une quelconque des revendications 1 à 11, avec n est égal à 4 ou plus, caractérisé en ce que l'on fait passer X ou M à travers le passage le plus interne.
